## Europäisches Patentamt
## European Patent Office
## Office européen des brevets

(19)

(11) Numéro de publication: **0 120 772 B1**

(12) **FASCICULE DE BREVET EUROPEEN**

(45) Date de publication du fascicule du brevet:
24.08.88

(51) Int. Cl.⁴: **C 02 F 3/28**

(21) Numéro de dépôt: **84400554.6**

(22) Date de dépôt: **20.03.84**

(54) **Perfectionnements apportés aux installations et aux procédés d'épuration biologique et de préparation des gaz combustibles par fermentation anaérobie en deux phases.**

(30) Priorité: **24.03.83 FR 8304867**

(43) Date de publication de la demande:
**03.10.84 Bulletin 84/40**

(45) Mention de la délivrance du brevet:
**24.08.88 Bulletin 88/34**

(84) Etats contractants désignés:
**AT BE CH DE FR GB IT LI LU NL SE**

(56) Documents cités:
**EP - A - 0 028 050**
**DE - A - 2 939 169**
**DE - A - 3 228 782**
**FR - A - 1 213 721**

(73) Titulaire: **BERTIN & CIE, Zone Industrielle Boîte postale 3, F-78373 Plaisir Cédex (FR)**

(72) Inventeur: **Raymond, Bernard Pierre Marie, Chemin de Catuy, F-40440 Ondres (FR)**
Inventeur: **Milande, Nicolas André Noel, Avenue de Verdun, F-40130 Capiereton (FR)**
Inventeur: **Deysson, Jean-Yves Joseph, 42 Avenue Edison, F-75013 Paris (FR)**

(74) Mandataire: **Orès, Bernard et al, Cabinet ORES 6, Avenue de Messine, F-75008 Paris (FR)**

ACTORUM AG

## Description

La présente invention est relative à des perfectionnements apportés aux installations et aux procédés d'épuration biologique et de préparation des gaz combustibles par fermentation anaérobie en deux phases.

Il est connu depuis très longtemps de préparer les gaz combustibles par fermentation anaérobie de biomasses, et de très nombreuses installations des fermentations méthaniques ont été décrites. Ces installations utilisent soit la digestion conventionnelle du mélange intégral sans la séparation culture/effluent traité; soit un procédé par contact comportant un dispositif de séparation liquide/solide en aval du digesteur permettant de récupérer la biomasse et de la réinjecter dans le réacteur; soit encore un procédé basé sur la présence du lit de boues dans le fond de réacteur à travers lequel percole de bas en haut l'effluent.

La raréfaction des sources d'énergie et l'augmentation continuelle de leur prix, ainsi que la nécessité absolue d'épuration des déchets organiques de plus en plus nombreux, a conduit de nombreux chercheurs à étudier de plus près le mécanisme de la fermentation méthanique. On est ainsi arrivé à construire des installations pour une fermentation anaérobie en deux phases, dans deux digesteurs distincts. (Cf. notamment le Brevet US 4 022 665).

En effet, la fermentation méthanique de matières organiques s'accomplit par l'intervention successive de deux populations microbiennes différentes. Une première étape, dite phase acidogène, consiste en une hydrolyse de substances polymérisées, la dégradation des substrats simples aboutissant à la formation d'acides gras volatils, dont le principal est l'acide acétique. Une deuxième étape, dite phase méthanogène, (qui se déroule normalement en association avec la première phase) transforme les acides gras volatils en méthane et gaz carbonique. Or les bactéries responsables de l'acidification ont des vitesses de croissance et de cinétique de beaucoup supérieures (4 à 10 fois) à celles des bactéries méthanogènes, lesquelles, de plus, sont très sensibles à une baisse du pH au-dessous de la neutralité. Cette inhibition de la méthanogénèse se traduit non seulement par l'accumulation des acides gras volatils mais également par la modification de la composition des acides gras volatils avec une augmentation notable des acides propionique et butyrique au détriment de l'acide acétique, lesquels acides propionique et butyrique sont beaucoup plus difficilement dégradés. D'où l'idée préconisée notamment par GHOSH et Collab. [J. Wat. Pollut. Control. Feder. 47 (1) p. 30–45 (1975)], par KEENAN [J. Environmental Sciences Health (1976) II p. 525–548], par Massey et Collab. [J. Wat. Pollut. Control. Feder. (1978) 50 (9) p. 2204–2222] et par d'autres encore, de séparer les deux phases afin de mieux contrôler ces différentes activités et de les optimiser. Ainsi on est arrivé (surtout dans le cas de substrat à forte concentration et dont la charge est essentiellement soluble sans qu'il y ait de phase de solubilisation) à séparer les phases d'acidogénèse et de méthanogénèse en maintenant les deux populations bactériennes dans deux réacteurs séparés fonctionnant en série. La solution ainsi préconisée présente toutefois un inconvénient de taille, à savoir la nécessité de construire de multiples réacteurs et d'augmenter ainsi le coût des installations.

Il est par ailleurs connu dans l'Art antérieur (Demandes de Brevet DE-A-3 228 782 et EP-A-0 028 050) d'utiliser une installation de fermentation anaérobie en deux phases composée d'un réacteur unique qui comporte une zone inférieure acidogène et une zone supérieure méthanogène, séparées entre elles par une chicane ou un cône, avec des moyens d'agitation, une tuyauterie qui amène l'effluent liquide à épurer dans la zone acidogène, des tuyauteries d'évacuation des gaz produits et des boues, et qui peut également comporter une zone d'accumulation des gaz produits superposée à la zone méthanogène et une zone d'accumulation des boues au fond de la zone acidogène.

La présente invention s'est par conséquent donné pour but de fournir une installation et un procédé d'épuration biologique et de préparation des gaz combustibles par fermentation anaérobie de déchets organiques (et notamment de déchets des laiteries, des brasseries, des abattoirs, des sucreries, etc...), qui répondent mieux aux nécessités de la pratique que les installations et procédés visant au même but antérieurement connus, notamment en ce qu'ils permettent une importante simplification et importante économie de construction et de fonctionnement, tout en séparant les deux phases d'acidogénèse et de méthanogénèse, ce qui a pour résultat:

– d'augmenter les vitesses de transformation en maintenant chaque population bactérienne dans des conditions optimales;

– de réduire l'inhibition des bactéries méthanogènes par les acides gras volatils produits par les bactéries acidogènes,

– de mieux contrôler le processus en contrôlant la teneur en acides gras, ainsi que le profil des acides produits.

La présente invention a pour objet une installation de préparation des gaz combustibles par fermentation anaérobie en deux phases, notamment d'un effluent industriel dont la charge polluante est constituée essentiellement par de la matière organique dissoute, du type comportant:

– un réacteur unique; – deux zones distinctes ménagées à l'intérieur de ce réacteur unique, à savoir une zone inférieure morte de fermentation acidogène, constitué d'un lit de boues sur lequel sont greffés les microorganismes acidogènes, et une zone supérieure agitée de fermentation méthanogène, le volume de la zone supérieure méthanogène étant d'environ 4 à 10 fois plus grand que le volume de la zone inférieure acidogène; – une chicane de séparation entre ces deux zones, fixée sur la paroi intérieure du réacteur unique et inclinée par rapport à cette dernière; – des moyens d'agitation, notamment disposés dans ladite zone supérieure méthanogène;
– une tuyauterie traversant la zone supérieure méthanogène et reliée à un réservoir qui amène les boues, avec l'effluent liquide à épurer directement dans la zone acidogène; – des tuyauteries d'évacuation des gaz produits et des boues; – une zone d'accumulation des gaz produits superposée à la zone méthanogène, et – une zone d'accumulation de la boue au fond de la zone acidogène, laquelle installation est caractérisé en ce que la partie supérieure de la zone méthanogène est munie d'un trop-plein qui déverse le liquide en provenance de cette zone vers un décanteur par l'intermédiaire d'un déflecteur pour la séparation du liquide des boues entraînées, lesquelles boues sont recyclées vers le réservoir décanteur d'alimentation de la zone acidogène, en ce que la chicane comporte une partie cylindrique s'étendant jusque dans la partie inférieure de la zone d'acidogénèse, et en ce que les boues fixées sur un support formé de particules solides à grande surface, à poids élevé et à pouvoir absorbant important.

Selon une disposition avantageuse de l'installation conforme à la présente invention, le support est formé de particules de lignine divisée.

Normalement dans tout fermenteur les bactéries sont fixées soit sur un support naturel (matières en suspension du substrat), soit sur un support artificiel (garnissage).

La lignine divisée (obtenue par exemple par l'hydrolyse acide des copeaux), utilisée conformément à la présente invention, permet d'améliorer grandement la productivité grâce notamment à:
– sa grande surface spécifique, ce qui permet aux microorganismes de se fixer avec une densité élevèe,
– son poids spécifique élevé (environ 1,4) ce qui permet une décantation accélérée des cellules et la possibilité de les recycler en totalité,
– sa biodégradabilité faible en raison de la structure de la molécule et donc une faible consommation,
– son pouvoir absorbant important, ce qui permet de piéger les produits inhibiteurs rejetés par les cellules et par là d'augmenter la vitesse d'assimilation du substrat par les micro-organismes.

La présente invention a également pour objet un procédé de préparation de gaz combustible par fermentation anaérobie en deux phases, notamment d'un effluent industriel dont la charge polluante est constituée essentiellement par de la matière organique dissoute et dont la demande chmique en oxygène (DCO) est en particulier comprise entre 5 et 100 g/l, à l'aide de l'installation selon les dispositions qui précèdent, caractérisé en ce qu'il consiste à: – alimenter en effluent à traiter ledit réacteur unique à travers un lit de boues acidogènes; – décanter le liquide épuré, récolté par l'intermédiaire dudit trop-plein, dans un décanteur, et – recycler les boues ainsi décantées.

Selon un mode de réalisation préféré du procédé conforme à l'invention, la température du réacteur unique est maintenue entre 32° et 40°C.

Selon un mode de réalisation avantageux du procédé conforme à l'invention, le temps de séjour de l'effluent à traiter est compris entre 1 heure et 48 heures, suivant sa concentration.

Outre les dispositions qui précèdent, l'invention comprend encore d'autres dispositions, qui ressortiront de la description qui va suivre.

La présente invention vise plus particulièrement les procédés et les installations de production du gaz combustible conformes aux dispositions qui précèdent, ainsi que les moyens propres à la mise en œuvre de ces procédés et à la réalisation de ces installations, de même que les procédés d'ensemble et les chaînes de fabrication dans lesquels sont inclus les procédés et les installations conformes à la présente invention.

Il doit être bien entendu, toutefois, que l'installation décrite dans ce qui va suivre et représentée sur le dessin, est donnée uniquement à titre d'illustration de l'objet de l'invention, mais n'en constitue en aucune manière une limitation.

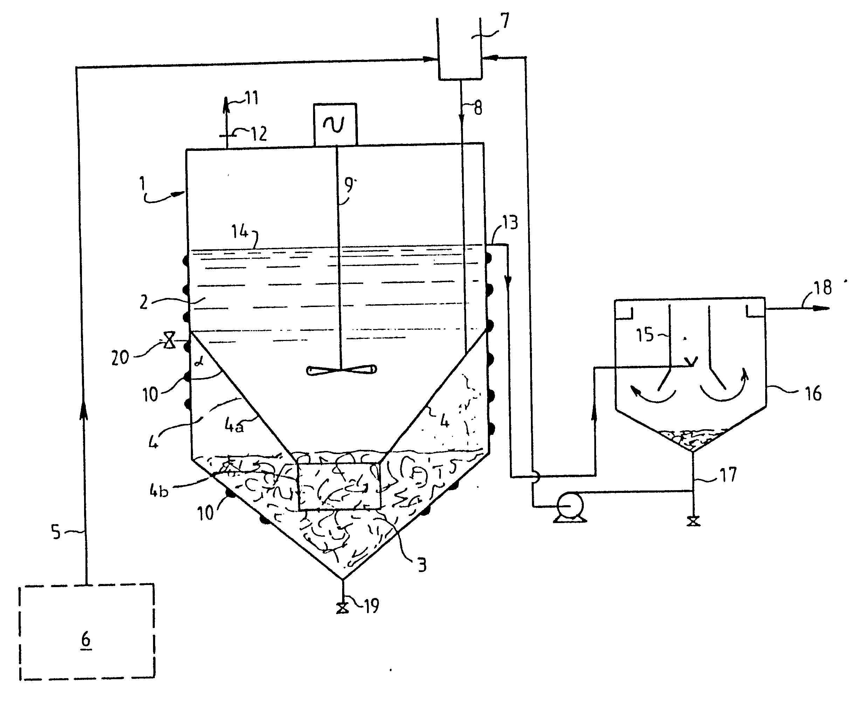

L'installation conforme à la présente invention qui produit du méthane par fermentation anaérobie et est représentée schématiquement à la figure 1 comprend, non limitativement, un fermenteur 1 comportant deux zones: la zone supérieure 2 méthanogène et la zone inférieure 3, acidogène. La chicane 4 fixée sur la partie intérieure du fermenteur 1 sépare les deux zones. L'angle α délimité par la chicane 4 et la paroi du fermenteur 1 est d'environ 30°; cette chicane comporte une partie tronconique 4a prolongée par une partie cylindrique 4b s'étendant jusque dans la partie inférieure de la zone d'acidogénèse.

L'alimentation se fait par l'intermédiaire d'un circuit 5 qui part des cuves de stockage 6 et qui aboutit au réservoir 7 à partir duquel le tuyau 8 alimente le fermenteur 1. Le tuyau d'alimentation 8 plonge directement dans la zone de boues acidogènes 3 et toutes les particules solides en suspension dans le liquide d'alimentation sont retenues dans la zone de boues et petit à petit solubilisés par la fermentation acidogène. Un robinet de purge 20 est prévu à la partie supérieure de la zone de boues acidogènes.

Dès que l'alimentation est terminée on met l'agitateur 9 en marche et la température du fermenteur 1 est maintenue vers 35° à l'aide du serpentin de chauffage 10. Le gaz produit (environ 70% de $CH_4$ et 30% de $CO_2$) est récolté à l'aide de la tuyauterie 11 munie d'une soupape 12.

On peut prévoir à l'intérieur de la chicane 4, soit un aubage redresseur (non représenté), pour éviter que le liquide inférieur ne tourne lorsque l'agitateur fonctionne, soit un organe d'obturation séquentiel (non représenté) qui ne met en communication les deux zones 2 et 3 que pendant les phases d'alimentation et éventuellement de décantation.

A la hauteur du niveau supérieur 14 du liquide de la zone supérieure 2 se trouve un déversoir 13 qui fonctionne pendant l'alimentation du fermenteur 1 et qui amène le liquide dans le décanteur 16 par intermédiaire d'un déflecteur 15. Le liquide clair épuré est évacué par la tuyauterie 18, tandis que les boues entraînées décantées sont recyclées à l'aide de la tuyauterie 17 vers le réservoir 7. Le fermenteur 1 est muni également d'un robinet de purge 19 pour pouvoir évacuer, si nécessaire, les boues ou une partie de boues du fermenteur 1.

Grâce à cette séparation du fermenteur en deux zones, on obtient un maximum du rendement en acides volatils (principalement en acide acétique) dans la zone inférieure acidogène 3 (contenant des boues sur un support de lignine divisée, par exemple) et un maximum de transformation des acides volatils en méthane dans la zone supérieure 2 agitée.

Le fonctionnement de l'installation peut être illustré non limitativement, par l'exemple suivant:
– Effluent industriel d'alimentation: lactosérum de laiterie-fromagerie,
– Teneur en matière organiques: 50 g/l,
– Teneur en DCO: 60 g/l,
– Teneur en matières en suspension: 8 g/l,
– Volume total du fermenteur: 250 m³,
– Débit journalier: 100 m³
– Volume utile du lit de boue acidogène: 50 m³ (correspondant à un temps de séjour hydraulique de 12 heures)
– Volume utile de la zone agitée: 200 m³ (correspondant à un temps de séjour de 2 jours environ).
– Cycle d'une opération dure environ 4 heures et se répartit ainsi:
Alimentation: 15 minutes
Temps de décantation après l'alimentation: 75 minutes
Mise en route de l'agitation: 150 minutes
– Concentration en acides gras volatils à la sortie de la zone acidogène: 20 à 25 g/l, soit une productivité en acides gras volatils de l'ordre de 2 g/l réacteur/heure.
– Epuration: 90% sur DCO
80% sur les matières en suspension.
– Production du gaz: 300 à 500 l/kg DCO environ
soit 1500 à 2500 m³/jour
soit 6 à 10 m³ de gaz/m³ cuve/jour.

Dans le cas d'un effluent industriel particulièrement riche en matière organique (DCO > 100 g/l) il est très utile de le diluer, par exemple, à l'aide de l'effluent épuré 18 d'une opération précédente. Les séquences d'agitation, d'alimentation et de décantation d'un fermenteur sont bien entendu programmées en fonction de la vitesse de décantation des particules en suspension dans le réacteur de façon à les maintenir plus longtemps dans le réacteur sans trop utiliser de décanteur extérieur et de la recirculation.

Ainsi que cela ressort de ce qui précède, l'invention ne se limite nullement à ceux de ses modes de mise en œuvre, de réalisation et d'application qui viennent d'être décrits de façon plus explicite; elle en embrasse, au contraire, toutes les variantes qui peuvent venir à l'esprit du technicien en la matière sans s'écarter du cadre, ni de la portée, de la présente invention, en particulier les variantes liées à la nature de l'effluent à traiter, et notamment la variante selon laquelle si, par exemple, l'effluent à traiter ne nécessite qu'une acidogénèse réduite ou nulle, l'importance relative de la zone acidogène sera réduite en conséquence.

**Revendications**

1. Installation de préparation de gaz combustibles par fermentation anaérobie en deux phases, notamment d'un effluent industriel dont la charge polluante est constituée essentiellement par de la matière organique dissoute, du type comportant: – un réacteur unique (1); – deux zones distinctes (2, 3) ménagées à l'intérieur de ce réacteur unique, à savoir une zone inférieure morte (3) de fermentation acidogène, constituée d'un lit de boues sur lequel sont greffés les micro-organismes acidogènes, et une zone supérieure (2) agitée de fermentation méthanogène, le volume de la zone supérieure méthanogène étant d'environ 4 à 10 fois plus grand que le volume de la zone inférieure acidogène; – une chicane (4) de séparation entre ces deux zones (2, 3), fixée sur la paroi intérieure du réacteur unique (1) et inclinée par rapport à cette dernière; – des moyens d'agitation (9), notamment disposés dans ladite zone supérieure (2) méthanogène; – une tuyauterie (8) traversant la zone supérieure méthanogène (2) et reliée à un réservoir (7) qui amène les boues, avec l'effluent liquide à épurer directement dans la zone inférieure (3) acidogène; – des tuyauteries (11, 19) d'évacuation des gaz produits et des boues; – une zone d'accumulation des gaz produits superposée à la zone méthanogène, et – une zone d'accumulation de la boue au fond de la zone acidogène, laquelle installation est caractérisée en ce que la partie supérieure de la zone méthanogène (2) est munie d'un trop-plein (13) qui déverse le liquide en provenance de cette zone vers un décanteur (16) par l'intermédiaire d'un déflecteur (15) pour la séparation du liquide des boues entraînées, lesquelles boues sont recyclées vers le réservoir (7) décanteur d'alimentation de la zone acidogène (3), en ce que la chicane comporte une partie cylindrique s'étendant jusque dans la partie inférieure de la zone d'acidogénèse et en ce que les boues sont fixées sur un support formé de particules solides à grande surface, à poids élevé et à pouvoir absorbant important.

2. Installation selon la revendication 1, caractérisée en ce que le support est formé de particules de lignine divisée.

3. Procédé de préparation de gaz combustibles par fermentation anaérobie en deux phases, notamment d'un effluent industriel dont la charge polluante est constituée essentiellement par de la matière organique dissoute et dont la demande chimique en oxygène (DCO) est en particulier comprise entre 5 et 100 g/l, à l'aide de l'installation selon l'une quelconque des revendications 1 et 2, caractérisé en ce qu'il consiste à: – alimenter en effluent à traiter ledit réacteur unique à travers un lit de boues acidogènes; – décanter le liquide épuré, récolté par l'intermédiaire dudit trop-plein, dans un décanteur, et – recycler les boues ainsi décantées.

4. Procédé selon la revendication 3, caractérisé en ce que la température du réacteur unique (1) est maintenue entre 32° et 40 °C.

5. Procédé selon l'une quelconque des revendications 3 et 4, caractérisé en ce que le temps de séjour de l'effluent à traiter est compris entre 1 heure et 48 heures suivant sa concentration.

**Claims**

1. An installation for the preparation of combustible gases by anaerobic two-phase fermentation, notably of an industrial effluent whose pollutant load is made up essentially of dissolved organic matter, of a type comprising: – a single reactor (1); – two distinct zones (2, 3) provided inside this single reactor, i.e., a dead lower zone (3) for acidogenic fermentation, made up of a sludge bed on which the acidogenic microorganisms are grafted, and an upper zone (2) stirred by methanogenic fermentation, the volume of the upper methanogenic zone being about 4 to 10 times greater than the volume of the lower acidogenic zone; – a baffle (4) for separating these two zones (2, 3), attached to the inner wall of the single reactor (1) and inclined in relation to the latter; – stirring means (9), notably provided in said upper methanogenic zone (2); – pipes (8) crossing the upper methanogenic zone (2) and connected to a tank (7) for conveying the sludge, with the liquid effluent to be directly purified in the lower acidogenic zone (3); – pipes (11, 19) for discharging produced gases and sludge; an accumulation zone for produced gases, stacked upon the methanogenic zone, and – a sludge accumulation zone at the bottom of the acidogenic zone, which installation is characterized in that the upper part of the methanogenic zone (2) is provided with an overflow (13) to allow the liquid from this zone to flow into a decanter (16) through a deflector (15) for the separation of the liquid from carried along sludges, which sludges are recirculated toward the decanter tank (7) for feeding the acidogenic zone (3), in that the baffle comprises a cylindrical part extending to the lower part of the acidogenic zone, and in that the sludges are arranged on a supporting means formed by large surface, high weight and large absorbing power particles.

2. Installation according to claim 1, characterized in that the supporting means is made up of divided lignin particles.

3. Process for the preparation of combustible gases by anaerobic two-phase fermentation, notably of an industrial effluent whose pollutant load is made up essentially of dissolved organic matter and whose chemical oxygen demand (COD) is particularly between 5 and 100 g/l, with the help of the installation according to any of claims 1 and 2, characterized in that it consists in: – feeding with effluent to be treated said single reactor through a bed of acidogenic sludges; – decanting the purified liquid, collected through said overflow, in a decanter, and – recirculating the sludges after decanting them in this manner.

4. Process according to claim 3, characterized in that the temperature of the single reactor (1) is held between 32° and 40 °C.

5. Process according to any of claims 3 and 4, characterized in that the residence time of the effluent to be treated is between 1 hour and 48 hours according to its concentration.

**Patentansprüche**

1. Anlage zur Herstellung von brennbaren Gasen durch eine zweiphasige anaerobe Gärung, insbesondere aus Industrieabwässern, deren Verschmutzung im wesentlichen aus gelösten organischen Stoffen besteht, wobei die Anlage versehen ist mit: – einem einzigen Reaktionsgefäss (1); – zwei getrennten Bereichen (2, 3), die im Innern dieses einzigen Reaktionsgefässes ausgebildet sind, wobei der untere, stehende Bereich (3) der säurebildenden Gärung aus einer Schlammschicht besteht, auf der die säurebildenden Mikroorganismen gepfropft sind und einem oberen, durchgerührten Bereich (2) mit methanbildender Gärung, der im Volumen etwa vier- bis zehnmal so gross ist wie der untere säurebildende Bereich; – mit einem Prallblech (4) zur Trennung zwischen diesen zwei Bereichen (2, 3), das an der Innenwand des einzigen Reaktionsgefässes (1) befestigt und im Verhältnis zu letzterem geneigt ist; – mit einer Rühreinrichtung (9), die insbesondere im oberen, methanbildenden Bereich (2) angeordnet ist; – mit einem Rohrleitungssystem (8), das den oberen, methanbildenden Bereich (2) durchquert und das mit einem Vorratsbehälter (7) verbunden ist, der die Schlämme mit den flüssigen, zu reinigenden Abwässern direkt dem säurebildenden unteren Bereich (3) zuführt; – mit Rohrleitungssystemen (11, 19) zur Ableitung der erzeugten Gase und der Schlämme; – mit einem Sammelbereich für die erzeugten Gase, der über dem methanbildenden Bereich angeordnet ist, und – mit einem Sammelbereich für Schlamm am Boden des säurebildenden Bereichs, wobei die Anlage dadurch gekennzeichnet ist, dass der obere Teil des methanbildenden Bereichs (2) einen Überlauf (13) aufweist, der die aus diesem Bereich stammende Flüssigkeit zu einem Abscheider (16) über eine Ablenkeinrichtung (15) ableitet, um die Flüssigkeit von den mitgeführten Schlämmen zu separieren, wobei die Schlämme zum Vorratsabscheidebehälter (7) des säurebildenden Bereichs (3) zurückgeführt werden, dass das Prallblech ein zylindrisches Teil aufweist, das sich bis in den unteren Teil des säurebildenden Bereichs erstreckt und dass die Schlämme auf einer Unterlage aus festen Partikeln mit grosser Oberfläche, hohem Gewicht und grossem Absorptionsvermögen befestigt sind.

2. Anlage nach Anspruch 1, dadurch gekennzeichnet, dass die Unterlage aus zerteilten Ligninpartikeln besteht.

3. Verfahren zur Herstellung von brennbaren Gasen durch zweiphasige anaerobe Gärung, insbesondere aus Industrieabwässern, deren Verschmutzung im wesentlichen aus gelösten organischen Stoffen besteht und deren chemischer Sauerstoffbedarf insbesondere zwischen 5 und 100 g/l liegt, mit Hilfe der Anlage nach Anspruch 1 oder 2, dadurch gekennzeichnet, dass es darin besteht: – das einzige Reaktionsgefäss mit den zu behandelnden Abwässern durch eine säurebildende Schlammschicht zu speisen; – die gereinigte Flüssigkeit, die mittels des Überlaufs gewonnen wurde, in einen Abscheider zu dekantieren, und – die so dekantierten Schlämme wieder zurückzuführen.

4. Verfahren nach Anspruch 3, dadurch gekennzeichnet, dass die Temperatur des einzigen Reaktionsgefässes (1) zwischen 32° und 40 °C gehalten wird.

5. Verfahren nach Anspruch 3 oder 4, dadurch gekennzeichnet, dass die Verweildauer der zu behandelnden Abwässer je nach ihrer Konzentration zwischen 1 Stunde und 48 Stunden liegt.